# EUROPEAN PATENT SPECIFICATION

(11) **EP 1 123 815 B1**
(45) Date of publication and mention of the grant of the patent: **09.03.2011**
(21) Application number: 00850006.8
(22) Date of filing: 14.01.2000
(51) Int. Cl.: B44B 7/00, B23K 26/08

(54) **Arrangement for shaping and marking a target**
Anordnung zum Formen und Markieren eines Objektes
Système pour former et marquer un objet

(43) Date of publication of application: 16.08.2001
(73) Proprietor: Rexam Aktiebolag, 201 80 Malmö (SE)
(72) Inventor: Jendick, Manfred, 45661 Recklinghausen (DE)
(74) Representative: Jörgensson, Leif Sixten

(56) References cited:
- EP-A- 0 040 929
- EP-A- 0 085 484
- WO-A-97/11288
- WO-A-99/09853
- US-A- 2 641 998
- US-A- 2 648 278

## Description

### Technical Field

The present invention relates to an arrangement for manufacturing laser marked opening tabs, for instance of the type disclosed in WO 99/09853 on which the preamble to appended claim 1 is based.

### Background art

In many situations, there is a need to provide indicative markings on a product, for example, traceability markings indicating the origin of the product, or promotional marks. Such indicative markings can be provided by non-mechanical, i.e. non-contact, marking techniques, such as laser engraving or ink jet printing, see for instance EP-A-085, 484. Some of these non-contact techniques provide for flexibility in production and high production speeds. Often, the markings must be precisely located in a specific area of the product. To maintain a positional relationship between the markings and this specific area, the markings should be provided immediately before or after the processing step in which this area attains its final shape. Such a processing step could include stamping and/or punching of a target material to form an intermediate, or even a final product.

A conventional laser engraving system comprises a laser unit, which is fixedly mounted to a supporting unit and arranged to provide markings on a target in a marking area. This marking area is often, for reasons given above, located in the immediate vicinity of a processing apparatus. Normally, to eliminate any movements of the laser unit during the marking operation, the supporting unit is of heavy-weight construction and firmly secured to the ground by bolts or the like. In such an arrangement, when any adjustment or maintenance of the processing apparatus should be made, the laser unit and supporting unit must be disassembled and removed, and then reassembled again before restarting the processing apparatus. This is a time-consuming operation.

### Summary of the Invention

The object of the invention is to find a solution to the above described problems.

This object is achieved by an arrangement according to appended claim 1, preferred embodiments being defined in the dependent claims.

By making the supporting member slidable between the two positions, the arrangement of the invention allows for accurate alignment of the laser unit with the laser marking area adjacent to the tab forming apparatus, during operation thereof, while also providing immediate and complete access to the laser unit and the tab forming apparatus since the laser marking unit and the supporting member can be readily moved away from the tab forming apparatus. Thus, the time-consuming operation of disassembling the laser unit and the supporting member, for example for maintenance, is eliminated.

The arrangement according to the invention is particularly useful in the manufacture of laser marked opening tabs to be attached to ends for cans. Hence, the arrangement comprises a tab forming apparatus which is adapted to punch and stamp the strip to form the opening tabs. The laser unit is arranged upstream of the tab forming apparatus and is adapted to provide laser markings on the strip in the laser marking area adjacent to the tab forming apparatus, such that the opening tabs after being formed in the tab forming apparatus have laser markings on a tab surface. The supporting member is slidable between a first position in which the laser unit is aligned with the laser marking area, and a second position in which the laser unit and supporting member are spaced from the laser marking area and the tab forming apparatus. This arrangement allows for high-precision marking, while also providing the operator immediate and complete access to the tab forming apparatus and the laser unit for maintenance or the like. The laser unit is adapted to engrave the markings in the strip surface. Such an engraving operation provides for permanence of the markings, high throughput, high precision in position and layout of the markings, as well as flexibility in the layout and position of the markings on the strip.

### Brief Description of the Drawings

A presently preferred embodiment of the invention will now be described in more detail, reference being made to the accompanying schematic drawings.
Fig. 1 is a side view of an arrangement according to an embodiment of the invention.
Fig. 2a is a top view of the arrangement in Fig. 1.
Fig. 2b is an end view of the arrangement in Fig. 1 taken in the feeding direction of the strip towards the supporting member and the processing apparatus.
Fig. 3 is a plan view of a portion of a metal strip provided with indicative markings.
Fig. 4 is a bottom view of a tab having markings on its bottom surface.

### Description of Preferred Embodiments

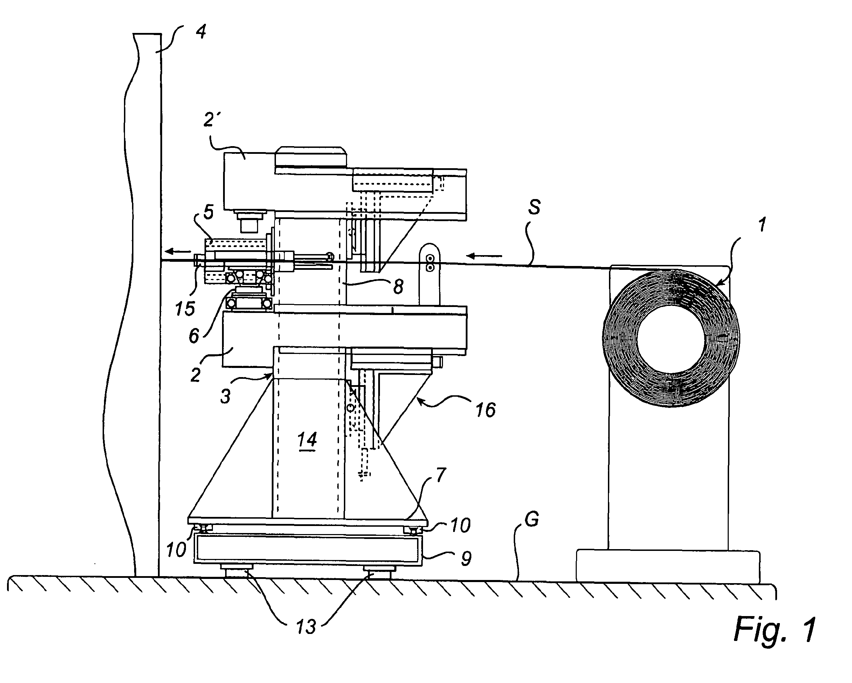

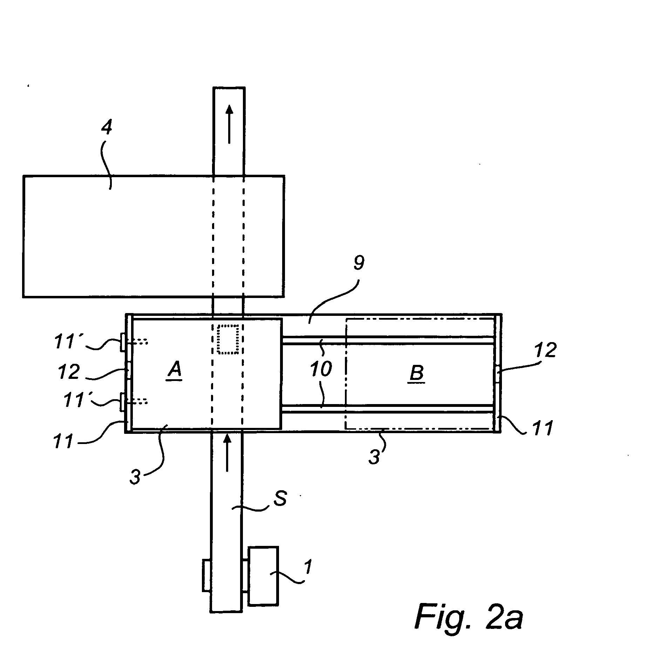

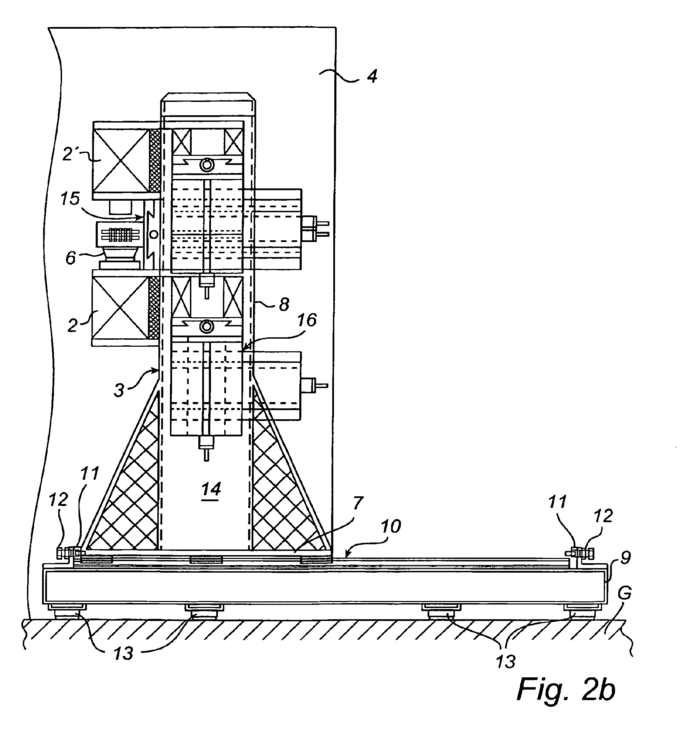

Fig. 1 shows part of an arrangement for manufacture of marked tabs or opening rings to be included in ends for beverage cans (not shown). A blank in the form of a thin, continuous metal strip S is fed from a supply 1 to a laser unit 2 supported by a supporting member 3. The laser unit 2 is of a high-power and high-speed type and is capable of providing engravings or markings in the surface of the strip S. The laser unit 2 is adapted to generate laser radiation at a suitable wavelength, and to focus and direct the generated radiation to an engraving area (indicated with dotted, thick lines in Fig. 2a) on the surface of the strip S. After the engraving operation in the engraving area, the strip S is fed to an adjacent tab forming apparatus 4 which is of a type known per se and which forms tabs by punching and stamping the strip S (see for instance the pamphlet "This is PLM Fosie" issued by Applicant's company PLM Fosie AB in the mid nineties). When passing the laser unit 2, the strip S is guided by a guiding unit 5 secured to the supporting member 3. Further, a dust protection device 6 is connected to the laser unit 2 to protect the laser unit 2 from dust or debris produced during the engraving operation.

In the embodiment shown in Fig. 1, the arrangement includes a second laser unit 2' which is arranged opposite to the laser unit 2 and is adapted to provide markings on an opposite side of the strip S. The following description of the laser unit 2, and its connection to the supporting member 3, is equally applicable to the second laser unit 2' and will therefore not be repeated.

The supporting member 3 comprises a horisontally extending base portion 7 and a vertical column 8, to which the laser unit 2 and the guiding unit 5 are connected. A foundation 9 is secured to the ground G, for example by means of bolts or the like (not shown). The base portion 7 is connected to the foundation 9 by means of cooperating elongate elements forming a rail-like structure 10, so that the supporting member 3 is slidable with minimum friction between two limiting positions A, B. These limiting positions are, as indicated in the top view of Fig. 2a; an operating position A in which the laser unit 2 (not shown in Fig. 2a) is aligned with the engraving area adjacent to the tab forming apparatus 4; and a maintenance position B in which the laser unit 2 as well as the supporting member 3 are arranged at a distance from the engraving area and the tab forming apparatus 4, so as to provide an operator complete access to the laser unit 2 as well as to the tab forming apparatus 4. The rail-like structure 10 will guide the supporting unit 3 in a controlled path between the operating and maintenance positions A, B, and allows for displacement of the supporting unit 3, if desired by hand, even when carrying a heavy load. To this end, it is preferred that the rail-like structure is formed by two parallel linear bearings. In the illustrated embodiment, the supporting unit 3 and the associated equipment weighs at least 900 kg.

Each limiting position A, B is defined by the base portion 7 engaging a stop plate 11 (not shown in Fig. 1) which projects above the foundation 9 at a respective end thereof. The operator can lock the supporting member 3 in the operating position A by engaging screws 11' with the base portion 7 via through-holes (not shown) in the associated stop plate 11. Although not shown, the associated stop plate 11 and the base portion 7 could have cooperating elements, such as a V-shaped block and a correspondingly V-shaped recess, to accurately locate the supporting member 3 in the desired operating position A. Preferably, the supporting member 3 can be returned to the operating position A with an accuracy of at least 0,1 mm.

A hydraulic shock absorber 12 is mounted on the stop plate 11 and provided to suitably decelerate the supporting member 3 before it engages with the stop plate 11 at the limiting positions A, B, to eliminate any undesired thrusts in the supporting member 3 on reaching the limiting positions A, B.

Since the tab forming apparatus 4 operates by stamping and punching the strip S, it will generate significant vibrations, often of relatively low frequency. If such vibrations were transmitted from the tab forming apparatus 4 to the supporting member 3 they might lead to undesired variations or changes in the position or alignment of the laser unit 2, the guiding unit 5, or any other associated equipment. To attenuate any such vibrations, the foundation 9 includes a vibration isolator 13, preferably of the type used in for example industrial measuring equipment. Further, the supporting member 3 is at least partly hollow and defines an interior space 14. By filling this space to a given degree by a filler material, for example metal balls, the eigenfrequencies of the supporting member 3 and the associated equipment can be adjusted away from the major frequencies of the vibrations generated by the tab forming apparatus 4.

The tab surface available for the markings is very small. Therefore, the laser radiation must be accurately positioned on the strip S, and the strip S must be also be accurately positioned during the laser engraving operation. Consequently, the laser unit 2 and the guiding unit 5 must be accurately positioned with respect to the engraving area adjacent to the tab forming apparatus 4. To this end, there is provided for fine adjustment in the position of these units 2, 5.

The guiding unit 5 is connected to the vertical column 8 via a two-dimensional positioner 15, which allows for fine adjustment of the local position of the guiding unit 5 in two orthogonal directions in the plane of the strip S. Thereby, the guiding unit 5 can be brought into perfect alignment with the tab forming apparatus 4, to minimize the forces acting on the strip S. Any slight mutual misalignment of the guiding unit 5 and the tab forming apparatus 4, especially in the lateral direction of the strip S, might bring about jamming, or even deformation, of the strip S. In an alternative embodiment, not shown, the positioner 15 provides for adjustment of the guiding unit 5 also in the vertical direction, to compensate for any settlement in the supporting member 3 or foundation 9.

The laser unit 2 is connected to the vertical column 8 via a three-dimensional positioner 16, which allows for fine adjustment of the local position of the laser unit 2 in the lateral and longitudinal directions of the strip S as well as in the vertical direction. The adjustment in the vertical direction allows the focal region of the laser unit 2 to be brought on a level with the engraving area, i.e. the surface of the strip S.

For acceptable results in the illustrated arrangement for marking and shaping opening tabs, the position of the laser unit 2 and the guiding unit 5 should be adjustable relative to the supporting member 3 with an accuracy of at least 0,02 mm, preferably at least 0,01 mm.

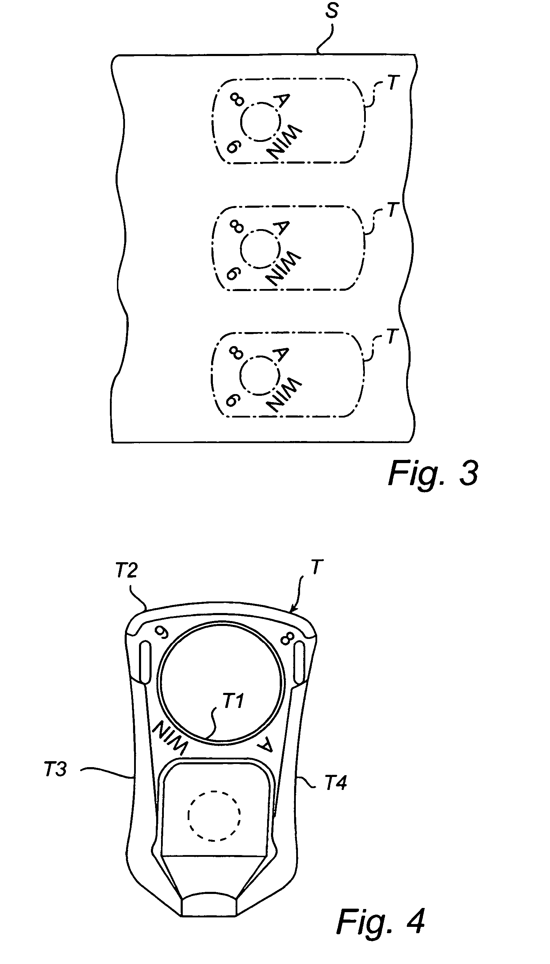

Fig 3 shows a portion of the strip S after the laser engraving operation at the laser unit 2, but before the punching and stamping operation in the tab forming apparatus 4. The laser unit 2 has provided the engraved markings WIN, A, 8, 9 on one surface of the strip S. The approximate periphery of the tab T to be produced in the following tab forming steps in the apparatus 4 has been indicated with ghost lines in Fig. 3. In practice, the size of the laser engraved markings is about 1.4 x 1.2 mm which makes them easily readable. In Fig. 4, the final tab T is shown from below after processing in the tab forming apparatus 4. The markings WIN, A, 9, 8 are now precisely located on a respective tab surface, in this case intermediate an opening T1 and peripheral edge portions T2, T3, T4 of the tab T.

It should be appreciated that the movement of the supporting unit 3 and/or the positioners 15, 16 could be electrically controlled, by means of electric motors or stepper motors (not shown), and that the supporting unit 3 could be secured in the operating position A by, for example, electromagnetic attraction.

## Claims

1. An arrangement for manufacturing laser marked opening tabs (T) to be attached to ends for cans, by shaping and laser marking a continuous metal strip (S) fed from a supply (1), past a laser unit (2) and to a tab forming apparatus (4) which is arranged to receive said strip (S) from a laser marking area adjacent to said tab forming apparatus (4) and which is adapted to mechanically shape said strip (S) by punching and stamping the same to form said opening tabs (T); said laser unit (2) being arranged upstream of said tab forming apparatus (4) and adapted to non-mechanically provide laser markings (WIN, A, 9, 8) on said strip (S) in said laser marking area; said laser unit (2) being adapted to generate laser radiation and direct and focus said laser radiation onto said strip (S) in said laser marking area, such that said opening tabs (T) - after being formed in said tab forming apparatus (4) - have said laser markings (WIN, A, 9, 8) on a tab surface; **characterized in that** the arrangement comprises a supporting member (3) which supports said laser unit (2) and which together with the same is slidable from a first operating position (A) in which said laser unit (2) is aligned with said laser marking area, to a second maintenance position (B) in which said laser unit (2) and supporting member (3) together are spaced and moved away from said laser marking area and said tab forming apparatus (4); said supporting member (3) supporting the laser unit (2) being slidable between said two positions; wherein said arrangement further comprises a foundation (9) which is adapted for arrangement on the ground (G), said supporting member (3) being slidably connected to said foundation (9) by means of co-operating elements (10).

2. An arrangement as claimed in claim 1, wherein said co-operating elements include a rail structure (10), preferably at least one linear bearing.

3. An arrangement as claimed in claim 1, wherein said foundation (9) comprises a vibration isolator (13) adapted to attenuate any vibration transmitted to said foundation (9) from said tab forming apparatus (4).

4. An arrangement as claimed in any one of the preceding claims, wherein said supporting member (3) defines an interior space (14) adapted to receive a filler material for adjustment of one or more eigen-frequencies of the supporting member (3).

5. An arrangement as claimed in any one of the preceding claims, further comprising motion dampening means (12) arranged to decelerate said supporting member (3) at least when it is approaching said first operating position (A).

6. An arrangement as claimed in any one of the preceding claims, further comprising securing means (11') adapted to secure said supporting member (3) in said first operating position (A).

7. An arrangement as claimed in any one of the preceding claims, wherein- in said first operating position (A) of the supporting member (3) - said laser unit (2) is adjustable in each of three orthogonal directions with respect to said supporting member (3), one of said directions being perpendicular to said laser marking area.

8. An arrangement as claimed in claim 7, wherein said laser unit (2) is adjustable with an accuracy of at least 0,02mm, preferably at least 0,01 mm.

9. An arrangement as claimed claim any one of the preceding claims, further comprising a guiding unit (5) connected to said supporting member (3) and adapted to guide said strip (S) through said laser marking area in a feeding direction of said tab forming apparatus (4).

10. An arrangement as claimed in claim 9, wherein - in said first operating position (A) of said supporting member (3) - said guiding unit (5) is adjustable at least in one direction perpendicular to said feeding direction, such that lateral forces on said strip (S) are minimized.

11. An arrangement as claimed in claim 10, wherein said guiding unit (5) is adjustable with an accuracy of at least 0,02mm, preferably at least 0,01mm.

## Patentansprüche

1. Anordnung zum Herstellen von lasermarkierten Öffnungslaschen (T), die an Stirnseiten von Dosen angebracht werden sollen, indem ein ununterbrochener Metallstreifen (S) geformt und lasermarkiert wird, der von einem Vorrat (1) an einer Lasereinheit (2) vorbei und zu einer Laschenbildungseinrichtung (4) zugeführt wird, die dazu ausgebildet ist, den Streifen (S) von einem Lasermarkierungsbereich zu empfangen, der der Laschenbildungseinrichtung (4) benachbart ist und der dazu ausgebildet ist, mechanisch den Streifen (S) durch Stanzen und Prägen desselben zum Bilden der Öffnungslaschen (T) zu formen; wobei die Lagereinheit (2) stromauf von der Laschenbildungseinrichtung (4) angeordnet ist und dazu ausgebildet ist, nichtmechanisch Lasermarkierungen (WIN, A, 9, 8) auf dem Streifen (S) in dem Lasermarkierungsbereich zu schaffen; wobei die Lasereinheit (2) dazu ausgebildet ist, Laserstrahlung zu erzeugen und die Laserstrahlung auf den Streifen (S) in dem Lasermarkierungsbereich zu richten und zu fokussieren, so dass die Öffnungslaschen (T) - nachdem sie in der Laschenbildungseinrichtung (4) gebildet sind - die Lasermarkierungen (WIN, A, 9, 8) auf der Laschenoberfläche haben; **dadurch gekennzeichnet, dass** die Anordnung ein Stützglied (3) aufweist, das die Lasereinheit (2) abstützt und dass zusammen mit derselben von einer ersten Stellung (A), in der die Lasereinheit (2) mit dem Lasermarkierungsbereich ausgerichtet ist, zu einer zweiten Wartungsstellung (B) verschiebbar ist, in der die Lasereinheit (2) und das Stützglied (3) zusammen beabstandet und von dem Lasermarkierungsbereich und der Laschenbildungseinrichtung (4) wegbewegt sind; wobei das Stützglied (3), das die Lasereinheit (2) abstützt, zwischen den beiden Stellungen verschiebbar ist; wobei die Anordnung weiter einen Unterbau (9) aufweist, der zum Anordnen auf dem Boden (G) ausgebildet ist, welches Stützglied (3) verschiebbar mit dem Unterbau (9) mit Hilfe von zusammenwirkenden Elementen (10) verbunden ist.

2. Anordnung nach Anspruch 1, bei der die zusammenwirkenden Elemente eine Schienenstruktur (10) einschließen, vorzugsweise wenigstens ein lineares Lager.

3. Anordnung nach Anspruch 1, bei der der Unterbau (9) einen Schwingungsisolator (13) aufweist, der dazu ausgebildet ist, irgendwelche Schwingung zu dämpfen, die von der Laschenbildungseinrichtung (4) zum Unterbau (9) übertragen wird.

4. Anordnung nach einen der vorangehenden Ansprüche, bei der das Stützglied (3) einen Innenraum (14) begrenzt, der dazu ausgebildet ist, ein Füllmaterial zum Einstellen von einer oder mehreren Eigenfrequenzen des Stützgliedes (3) aufzunehmen.

5. Anordnung nach einem der vorangehenden Ansprüche, die weiter Bewegungsdämpfungsmittel (12) aufweist, die dazu ausgebildet sind, das Stützglied (3) wenigstens dann zu verzögern, wenn es sich der ersten Betriebsstellung (A) nähert.

6. Anordnung nach einem der vorangehenden Ansprüche, die weiter Sicherungsmittel (11') aufweist, die dazu ausgebildet sind, das Stützglied (3) in der ersten Betriebsstellung (A) zu sichern.

7. Anordnung nach einem der vorangehenden Ansprüche, bei der - in der ersten Betriebsstellung (A) des Stützglieds (3) - die Lasereinheit (2) in jeder von drei ortogonalen Richtungen in Bezug auf das Stützglied (3) einstellbar ist, wobei eine der Richtungen senkrecht zum Lasermarkierungsbereich ist.

8. Anordnung nach Anspruch 7, bei der die Lasereinheit (2) mit einer Genauigkeit von wenigstens 0,02 mm, vorzugsweise wenigstens 0,01 mm einstellbar ist.

9. Anordnung nach einem der vorangehenden Ansprüche, die weiter eine Führungseinheit (5) aufweist, die mit dem Stützglied (3) verbunden ist und dazu ausgebildet ist, den Streifen (S) durch den Lasermarkierungsbereich in eine Zuführrichtung der Laschenbildungseinrichtung (4) zu führen.

10. Anordnung nach Anspruch 9, bei der - in der ersten Betriebsstellung (A) des Stützgliedes (3) - die Führungseinheit (5) wenigstens in eine Richtung senkrecht zur Zuführrichtung einstellbar ist, so dass seitliche Kräfte auf den Streifen (S) minimalisiert werden.

11. Anordnung nach Anspruch 10, bei der die Führungseinheit mit einer Genauigkeit von wenigstens 0,02 mm, vorzugsweise wenigstens 0,01 mm einstellbar ist.

## Revendications

1. Agencement pour fabriquer des languettes d'ouverture (T) avec marquage au laser destinées à être attachées aux extrémités pour des canettes, par mise en forme et marquage au laser d'un ruban métallique continu (S) fourni depuis une alimentation (1), en passant devant une unité à laser (2) et vers un appareil de formation de languettes (4) qui est agencé pour recevoir ledit ruban (S) depuis une zone de marquage au laser adjacente audit appareil de formation de languettes (4), et qui est adapté à conformer mécaniquement ledit ruban (S) par poinçonnage et matriçage de celui-ci pour former lesdites languettes d'ouverture (T) ; ladite unité à laser (2) étant agencée en amont dudit appareil de formation de languettes (4) et adaptée à appliquer de manière non mécanique des marquages laser (WIN, A, 9, 8) sur ledit ruban (S) dans ladite zone de marquage au laser ; ladite unité à laser (2) étant adaptée pour générer un rayonnement laser et diriger et focaliser ledit rayonnement laser sur ledit ruban (S) dans ladite zone de marquage au laser, de telle façon que lesdites languettes d'ouverture (T), après avoir été formées dans ledit appareil de formation de languettes (4), présentent lesdits marquages laser (WIN, A, 9, 8) sur une surface de la languette;
**caractérisé en ce que** l'agencement comprend un élément de support (3) qui supporte ladite unité à laser (2) et qui est capable de coulisser conjointement avec celle-ci depuis une première position fonctionnelle (A) dans laquelle ladite unité à laser (2) est alignée avec ladite zone de marquage au laser, vers une seconde position de maintenance (B) dans laquelle ladite unité à laser (2) et ledit élément de support (3) ensemble sont écartés et déplacés en éloignement de ladite zone de marquage au laser et dudit appareil de formation de languettes (4) ; ledit élément de support (3) supportant l'unité à laser (2) étant capable de coulisser entre lesdites deux positions ; dans lequel ledit agencement comprend en outre un fondement (9) qui est adapté à être agencé sur le sol (G), ledit élément de support (3) étant connecté en coulissement sur ledit fondement (9) au moyen d'éléments coopérants (10).

2. Agencement selon la revendication 1, dans lequel lesdits éléments coopérants incluent une structure en forme de rail (10), de préférence au moins un palier linéaire.

3. Agencement selon la revendication 1, dans lequel ledit fondement (9) comprend un isolateur de vibrations (13) adapté à atténuer toutes vibrations transmises audit fondement (9) depuis ledit appareil de formation de languettes (4).

4. Agencement selon l'une quelconque des revendications précédentes, dans lequel ledit élément de support (3) définit un espace intérieur (14) adapté à recevoir un matériau de remplissage pour ajuster une ou plusieurs fréquences propres de l'élément de support (3).

5. Agencement selon l'une quelconque des revendications précédentes, comprenant en outre des moyens d'amortissement de mouvement (12) agencés pour décélérer ledit élément de support (3) au moins lorsqu'il s'approche de ladite première position fonctionnelle (A).

6. Agencement selon l'une quelconque des revendications précédentes, comprenant en outre des moyens d'attache (11') adaptés pour attacher ledit élément de support (3) dans ladite première position fonctionnelle (A).

7. Agencement selon l'une quelconque des revendications précédentes, dans lequel, dans ladite première position fonctionnelle (A) de l'élément de support (3), ladite unité à laser (2) est susceptible d'être ajustée dans chacune de trois directions orthogonales par rapport audit élément de support (3), l'une desdites directions étant perpendiculaire à ladite zone de marquage au laser.

8. Agencement selon la revendication 7, dans lequel ladite unité à laser (2) est susceptible d'être ajustée avec une précision d'au moins 0,02 mm, de préférence au moins 0,01 mm.

9. Agencement selon l'une quelconque des revendications précédentes, comprenant en outre une unité de guidage (5) connectée audit élément de support (3) et adaptée à guider ledit ruban (S) à travers ladite zone de marquage au laser dans une direction de fourniture dudit appareil de formation de languettes (4).

10. Agencement selon la revendication 9, dans lequel, dans ladite première position fonctionnelle (A) dudit élément de support (3), ladite unité de guidage (5) est susceptible d'être ajustée dans au moins une direction perpendiculaire à ladite direction de fourniture, de sorte que les forces latérales sur ledit ruban (S) sont minimisées.

11. Agencement selon la revendication 10, dans lequel ladite unité de guidage (5) est susceptible d'être ajustée avec une précision d'au moins 0,02 mm, de préférence au moins 0,01 mm.
